# EUROPÄISCHE PATENTSCHRIFT

(11) **EP 3 721 260 B1**
(45) Veröffentlichungstag und Bekanntmachung des Hinweises auf die Patenterteilung: **29.07.2026**
(21) Anmeldenummer: 18803318.7
(22) Anmeldetag: 08.11.2018
(51) Int. Cl.: G01S 13/87, G01S 13/88, G01S 13/89, G01S 13/931, B60W 30/18, G08G 1/16

(54) **SYSTEM MIT ANLAGE UND MOBILTEIL UND VERFAHREN ZUM BETREIBEN DES SYSTEMS**
SYSTEM COMPRISING AN INSTALLATION AND MOBILE PART, AND METHOD FOR OPERATING THE SYSTEM
SYSTÈME COMPORTANT UNE INSTALLATION ET UNE PARTIE MOBILE ET PROCÉDÉ POUR FAIRE FONCTIONNER LE SYSTÈME

(30) Priorität: 05.12.2017 DE 102017011200
(43) Veröffentlichungstag der Anmeldung: 14.10.2020
(73) Patentinhaber: SEW-EURODRIVE GmbH & Co. KG, 76646 Bruchsal (DE)
(72) Erfinder: WANJEK, Andreas, 68753 Waghäusel (DE); HUA, Zhidong, 76646 Bruchsal (DE); SCHÄFER, Thomas, 76689 Karlsdorf-Neuthard (DE); SCHMIDT, Josef, 76676 Graben-Neudorf (DE); AYHAN, Serdal, 69190 Walldorf (DE)
(86) Internationale Anmeldenummer: PCT/EP2018/025287
(87) Internationale Veröffentlichungsnummer: WO 2019/110143

(56) Entgegenhaltungen:
- WO-A1-2014/065856
- DE-A1- 102009 054 776
- DE-A1- 102011 111 895
- DE-A1- 102013 212 255
- DE-A1- 102014 010 381
- DE-B3- 102015 221 439
- US-A- 4 328 545
- D. S. PRAKASH RAO ET AL: "Ground penetrating radar and its applications in civil engineering", THE INDIAN CONCRETE JOURNAL, November 2007 (2007-11-01), pages 35 - 40, XP055548578, Retrieved from the Internet <URL:https://icjonline.com/views/POV_Nov_2007.pdf> [retrieved on 20190129], DOI: 10.1094/PHYTO-97-12-1658

## Beschreibung

Die Erfindung betrifft ein System mit Anlage und Mobilteil und Verfahren zum Betreiben eines Systems.

Es ist allgemein bekannt, dass bei Fahrzeugen, also Automobilen für den Öffentlichen Straßenverkehr, Radarsensoren verwendet werden, welche den Abstand von Objekten erfassen.

**Aus der** DE 10 2011 109 597 A1 **ist ein Flurförderfahrzeug bekannt.**

**Aus der** WO 91/ 09 356 A1 **ist ein System für die Navigation von unbemannten Fahrzeugen bekannt.**

**Aus der** DE 10 2014 111 394 A1 **ist ein Lager- und Kommissioniersystem bekannt.**

**Aus der** WO 2014/065856 A1 **ist ein Verfahren zur Lokalisierung eines Fahrzeugs bekannt.**

**Aus der** DE 10 2014 010381 A1 **ist ein Verfahren zum Betrieb eines Fahrzeugsystems zum Schutz vor Beschädigungen durch Unebenheiten des Untergrunds bekannt.**

Aus der Veröffentlichung D. S. Prakash Rao et al.: "Ground penetrating radar and its applications in civil engineering", The Indian Concrete Journal, November 2007, p. 35-40 ist ein in den Boden eindringendes Radar bekannt.

**Aus der** DE 10 2009 054776 A1 **ist eine Kommunikation über Radar bekannt.**

**Aus der** DE 10 2015 221439 B3 **ist ein Verfahren zur Auswahl und Übertragung von Sensordaten von einem ersten zu einem zweiten Kraftfahrzeug bekannt.**

**Aus der** DE 10 2013 212 255 A1 **ist ein Verfahren zum Austausch von Informationen zwischen mindestens zwei Fahrzeugen bekannt.**

**Aus der** US 4 328 545 A **ist ein fahrerloses Fahrzeug bekannt.**

**Aus der** DE 10 2011 111895 A1 **ist eine Verfahren zur Verhinderung einer Fahrzeugkollision bekannt.**

Der Erfindung liegt daher die Aufgabe zugrunde, ein Mobilteil in kostengünstiger Weise und in einfacher Weise autonom bewegbar weiterzubilden.

Erfindungsgemäß wird die Aufgabe bei dem System nach den in Anspruch 1 und bei dem Verfahren nach den in Anspruch 6 angegebenen Merkmalen gelöst.

Von Vorteil ist dabei, dass das Mobilteil kein weiteres Positionsbestimmungssystem benötigt. Denn mittels der nach unten und nach oben gerichteten Radarsensoren, also mittels des ersten und zweiten Radarsensors, ist eine Detektion von stationär angeordneten Objekten, wie Armierungsstäben oder an der Decke der Anlagenhalle angebrachten Lampen oder deren Haltevorrichtungen, ermöglicht. Somit ist bei Inbetriebnahme eine Detektion und Positionsbestimmung einmalig ausführbar, sodass danach eine Orientierung und/oder Positionsbestimmung anhand der jeweils aktuell detektierten Armierungsstäbe und/oder Objekte ermöglicht ist.

Parallel zueinander angeordnete Armierungsstäbe sind voneinander beabstandet.

Mittels des dritten Sensors ist eine Detektion von im Verfahrbereich auftretenden Mobilteilen ermöglicht. Somit ist eine Kollisionsvermeidung ausführbar. Die Lampen und Haltevorrichtungen oder sonstige Anbauten an der Decke der Anlagenhalle sind ebenfalls stationär angeordnet und ermöglichen eine eindeutige Positionsbestimmung auch dann, wenn die im Bodenmaterial angeordneten Armierungsstäbe regelmäßig voneinander beabstandet angeordnet sind und somit allein aufgrund der Armierungsstäbe eine eindeutige Positionsbestimmung nicht ausführbar ist.

Erfindungsgemäß ist zu jeder mittels des ersten Radarsensors erfassten Position die mittels der anderen Radarsensoren erfassten relativen, auf das Mobilteil bezogenen Positionen der Objekte bestimmbar. Die Genauigkeit der Karte ist somit verbessert. Auch wenn die Radarsensoren also jeweils kontinuierlich Messwerte zur Verfügung stellen, wird erfindungsgemäß mittels des Synchronisierungsmittels nur zu den vom Synchronisierungsmittel vorgegebenen Synchronisationszeitpunkten von allen Radarsensoren jeweils zeitgleich die Messwerte erfasst und weiterverarbeitet, insbesondere zur Generierung der Karte. Vorzugsweise wird das positionswertige Ausgangssignal jedes Radarsensors einer jeweiligen Sample-Hold-Schaltung, insbesondere Abtast-Halteglied, zugeführt, deren Ausgang einem jeweiligen Eingang eines Multiplexers zugeführt wird, dessen Ausgang einem Analog-Digital-Wandler zugeführt wird. Somit ist trotz der synchronen Messwerterfassung eine, insbesondere kostengünstige, zeitlich serielle Messwertbestimmung ermöglicht. Die so bestimmten Messwerte werden danach zur Bestimmung der Karte verwendet.

Bei der erfindungsgemäßen Armierung ist von Vorteil, dass die Radarstrahlung das Betonmaterial durchdringt und somit auch die optisch nicht sichtbaren Armierungsstäbe detektierbar sind

Bei einer vorteilhaften Ausgestaltung ist die Steuerung derart geeignet ausgeführt, dass aus den von den Radarsensoren detektierten Objekten eine Karte der Anlage, insbesondere der Verfahrfläche der Anlage, erstellt wird. Von Vorteil ist dabei, dass die Lage der detektierten Objekte eingespeichert wird und somit eine jeweils aktuelle Positionsbestimmung ausführbar ist.

Bei einer vorteilhaften Ausgestaltung sind die Daten auf der vom dritten Radarsensor gesendeten oder empfangenen Radarstrahlung aufmoduliert. Von Vorteil ist dabei, dass keine weiteren Sender, beispielsweise im Funkstrahlenfrequenzbereich, notwendig sind. Denn der dritte Radarsensor ist auch zur Informationsübertragung verwendbar. Dabei ist besonders vorteilhaft ein Zeitschlitzverfahren anwendbar, also zeitlich alternierend wird dabei das Senden von Daten und das Erfassen von Abständen ausgeführt.

Bei einer vorteilhaften Ausgestaltung werden von der Steuerung auch von dem weiteren Radarsensor, der auf dem weiteren Mobilteil angeordnet ist, detektierte Objekte bei der Kartenerstellung und/oder bei einer Kollisionsprüfung für einen geplanten Bewegungsablauf berücksichtigt. Von Vorteil ist dabei, dass der Bewegungsablauf nur gestartet wird, wenn keine Kollision zu erwarten ist. Somit sind Unfälle vermeidbar und die Sicherheit erhöhbar.

Bei einer vorteilhaften Ausgestaltung wird bei der Detektion eines Objektes durch einen jeweiligen der Radarsensoren der Abstand des Objektes, Geschwindigkeit des Objektes und/oder Winkel des Objektes erfasst, insbesondere relativ zum jeweiligen Radarsensor. Von Vorteil ist dabei, dass stationäre Objekte von bewegten Objekten unterscheidbar sind.

Bei dem Verfahren zum Betreiben des Systems ist von Vorteil, dass das dritte Mobilteil auf einer parallel zur ersten Fahrspur angeordneten zweiten Fahrspur bewegbar ist. Dabei ist das dritte Mobilteil als Gegenverkehr bewegbar, also in zum ersten Mobilteil entgegengesetzter Fahrtrichtung. Die erste und zweite Fahrspur müssen dabei nicht weiter gekennzeichnet werden. Allerdings ist beispielsweise ein Spurführmittel, wie metallische Leitung, oder ein als Primärleiter langgestreckt verlegter Linienleiter im Bodenmaterial vorsehbar. Somit sind die Mobilteile durch diese Leiter in der jeweiligen Fahrspur führbar. Der Abstand zwischen der ersten und der zweiten Fahrspur ist größer als die Breite des jeweiligen Mobilteils, also die Ausdehnung des jeweiligen Mobilteils in Querrichtung zur Fahrtrichtung.

Bei einer vorteilhaften Ausgestaltung wird den von den Mobilteilen aufgenommenen Transportgütern eine jeweilige Priorität zugeordnet,
wobei der Überholvorgang nur ausgeführt wird, wenn die Priorität des vom ersten Mobilteil aufgenommenen Transportgutes höher ist als die Priorität des vom zweiten Mobilteil aufgenommenen Transportgutes und höher ist als die Priorität des vom dritten Mobilteil aufgenommenen Transportgutes. Von Vorteil ist dabei, dass die Information über die Priorität über den durch die dritten Radarsensoren bewirkten Datenübertragungskanal übertragbar sind und somit die Priorität des Transportgutes zur Entscheidung herangezogen wird, ob ein Überholvorgang eingeleitet wird. Somit ist der intralogistische Durchsatz in der Anlage erhöhbar.

Bei einer vorteilhaften Ausgestaltung wird im dritten Verfahrensschritt bei Beginn des Überholvorgangs vom ersten Mobilteil ans dritte Mobilteil ein Stop-Befehl, insbesondere also ein Befehl zum Anhalten des dritten Mobilteils, gesendet. Von Vorteil ist dabei, dass der Überholvorgang ohne sich bewegenden Gegenverkehr ausführbar ist. Somit ist die Relativgeschwindigkeit zwischen erstem und drittem Mobilteil möglichst gering und die Kollisionsgefahr weiter verringert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Mobilteil 1 gezeigt, das einen Radarsensor aufweist, dessen empfindlicher Bereich als parallel zur Verfahrfläche des Mobilteils 1 ausgerichtet ist.
In der Figur 2 wird ein alternativ verwendbares Mobilteil 1 mit Radarsensoren dargestellt, deren empfindlicher Bereich jeweils ebenfalls parallel zur Verfahrfläche des Mobilteils 1 ausgerichtet ist und in einer zur Verfahrfläche parallelen Ebene jeweils einen kleineren Winkelbereich überdecken als in Figur 1.
In der Figur 3 sind im Gegensatz zur Figur 2 Radarsensoren verwendet, deren empfindlicher Bereich breiter ist als der empfindliche Bereich der Radarsensoren aus Figur 2.
In der Figur 4 ist eine Anlage mit einem auf einer Verfahrfläche bewegbaren Mobilteil 1 gezeigt, wobei eine Last 40 auf dem Mobilteil aufgenommen ist und mitbewegbar ist und mittels Radarsensoren die an der Decke stationär angebrachten Anbauten 41 detektiert.
In der Figur 5 ist eine Gruppe von regelmäßig hintereinander angeordneten Mobilteilen 1 vorgesehen, deren beidseitig, also in Fahrtrichtung vorne und hinten, angeordnete Radarsensoren nicht nur das Einhalten eines vorgegebenen Abstandes ermöglichen, sondern auch einen bidirektionalen Datenübertragungskanal zwischen den Mobilteilen 1 bereitstellen.
In der Figur 6 ist im Unterschied zur Figur 5 jedes Mobilteil 1 nur mit einem Radarsensor an seiner in Fahrtrichtung vorderen Seite ausgestattet und mit einer in der Figur 6 nicht dargestellten Empfangseinheit an der in Fahrtrichtung hinteren Seite, so dass zwar das Einhalten eines vorgegebenen Abstandes ermöglicht ist, aber nur ein unidirektionaler Datenübertragungskanal zur Verfügung gestellt wird.
In der Figur 7 sind im Unterschied zur Figur 5 Radarsensoren mit schmalerem empfindlichen Bereich verwendet.
In der Figur 8 sind im Unterschied zur Figur 6 Radarsensoren mit schmalerem empfindlichen Bereich verwendet.
In der Figur 9 sind Mobilteile (91, 92, 93) gezeigt, welche auf Fahrbahnen bewegbar sind, wobei ein Überholvorgang ausführbar ist.

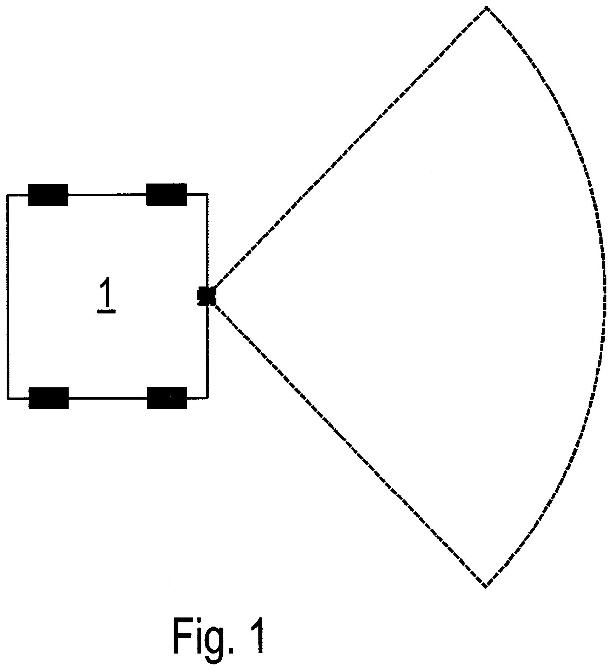

Wie in Figur 1 gezeigt, weist das Mobilteil 1 von einem elektromotorischen Antrieb bewegbare Räder und eine Lenkeinheit auf und ist somit auf der Verfahrfläche in einer Anlage bewegbar.

Die Anlage weist außerdem eine Decke und gegebenenfalls Wände auf.

An der Decke sind Anbauten 41, insbesondere Objekte, angeordnet, so dass diese von einem Mobilteil 1 mittels eines auf dem Mobilteil 1 angeordneten Radarsensors detektierbar sind. Somit ist also der dem jeweiligen Objekt zugeordnete auf das Mobilteil 1 bezogene Abstand, die auf das Mobilteil 1 bezogenen Relativgeschwindigkeit und der vom Mobilteil 1 aus bestimmte Winkel bestimmbar.

Aus diesen Messdaten ist eine Karte bestimmbar, welche die Lage der Objekte kennzeichnet. Während einer Bewegung durch die Anlage wird eine Vielzahl von solchen Messungen durchgeführt und somit eine entsprechend große Anzahl von solchen Messdaten verarbeitet.

Beispiele für Objekte sind nicht nur an der Decke befestigte Leuchtmittel, Lampen oder dergleichen, sondern auch Trägerschienen, Dachfenster, Lüftungsvorrichtungen und/oder Heizungsvorrichtungen.

Der Boden der Anlage ist ein Betonmaterial. Im Boden sind Armierungsstäbe aus Stahl angeordnet. Mittels eines an der Unterseite des Mobilteils 1 angeordneten weiteren Radarsensors ist durch das Betonmaterial hindurch eine Bestimmung der Positionen der Armierungsstäbe ermöglicht. Auch diese bestimmten Positionsmessdaten werden bei Ausbildung der Karte berücksichtigt.

Die Armierungsstäbe sind in einem regelmäßigen Gitter angeordnet, also voneinander regelmäßig beabstandet.

Die vom ersten Radarsensor in Wirkverbindung mit den Anbauten an der Decke bestimmten Messdaten und die vom zweiten Radarsensor in Wirkverbindung mit den Armierungsstäben bestimmten Messdaten bilden also die Grundlage für das Erstellen einer Karte von stationär angeordneten Objekten und Armierungsstäben sowie gegebenenfalls im Bodenmaterial angeordneter metallischer Teile.

Das Mobilteil 1 weist zumindest einen weiteren Radarsensor auf, der an der Seitenwand des Mobilteils 1 angeordnet ist, also an der Seite des Mobilteils 1.

Somit sind auch dynamische Objekte, also in der Anlage bewegbare Objekte, erkennbar. Insbesondere ist auch der Abstand zu einem vorausfahrenden Mobilteil bestimmbar und somit der Antrieb des Mobilteils derart steuerbar, dass der erfasste Abstand auf einen Sollwert hin geregelt wird.

Auf diese Weise ist eine Kolonnenfahrt realisierbar. Hierbei bewegt sich eine Gruppe von Mobilteilen 1 als Anordnung mit regelmäßiger Beabstandung zueinander. Somit ist ein Transportgut, beispielsweise ein überlanges Transportgut, von der Gruppe gemeinsam transportierbar.

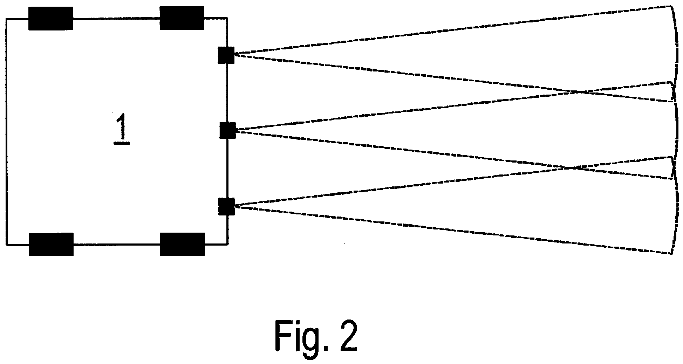

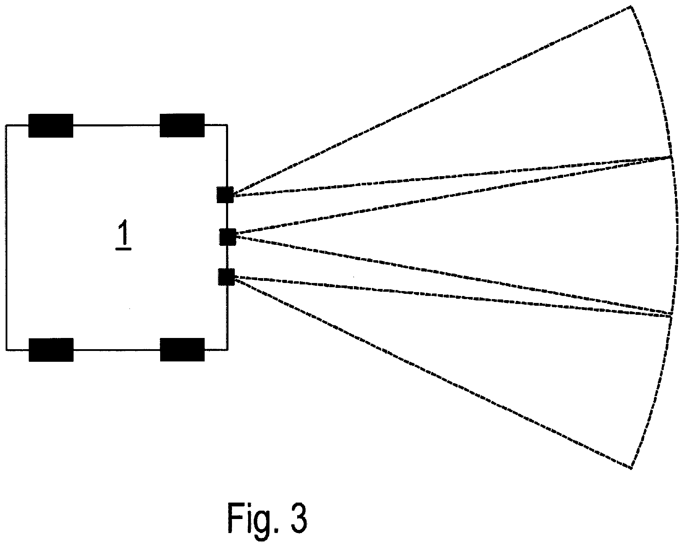

Statt eines in Figur 1 dargestellten Mobilteils 1 mit einem an der Seitenwand des Mobilteils 1 angeordneten Radarsensors, welcher einen breiten empfindlichen Bereich aufweist, sind auch mehrere Radarsensoren an der Seitenwand des Mobilteils 1 anordenbar, welche jeweils einen schmaleren empfindlichen Bereich aufweisen, wie in Figur 2 oder in Figur 3 gezeigt. Dabei überlappen die empfindlichen Bereiche der Radarsensoren der Figur 2, nicht aber die der Figur 3.

Bei der Darstellung der empfindlichen Bereiche wird nur derjenige Bereich gezeigt, innerhalb dessen eine klare Erkennung eines Objekts ermöglicht ist. Bei zu großem Abstand und zu großem Seitenwinkel ist die Erkennung nicht ausreichend zuverlässig ausführbar.

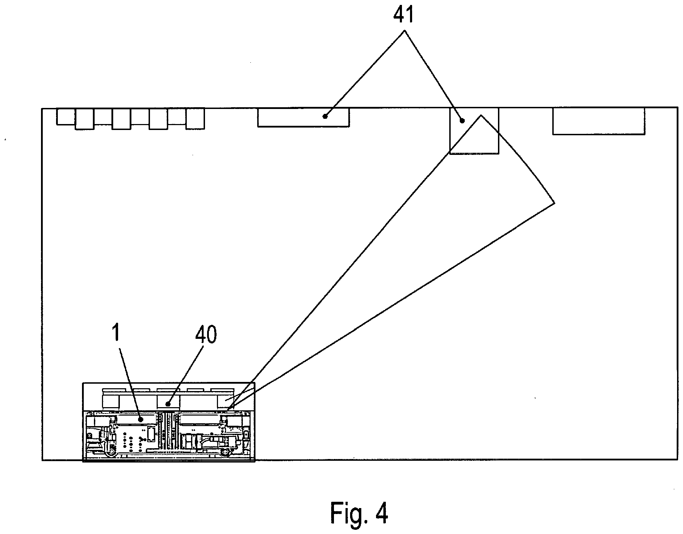

Wie in Figur 4 dargestellt, wird für die Detektion der an der Decke angeordneten Objekte 41 der Radarsensor am Mobilteil 41 derart positioniert, dass auch bei aufgenommenem Transportgut 40 eine Erfassung ungehindert ermöglicht ist.

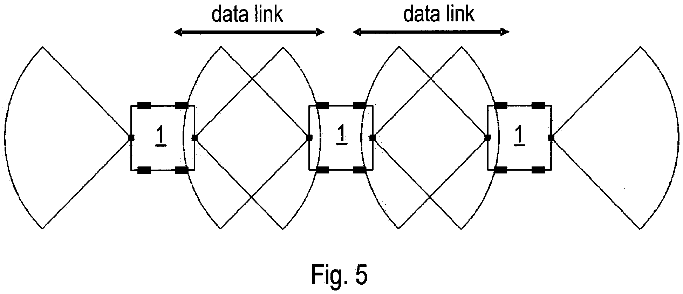

Wie in Figur 5 gezeigt, sind die Mobilteile 1 bei diesem Ausführungsbeispiel mit einem Radarsensor an der in Fahrtrichtung vorderen Seite und mit einem weiteren Radarsensor an der hinteren Seite ausgestattet. Somit ist bei der Kolonnenfahrt nicht nur der Abstand zum vorausfahrenden Mobilteil 1 einhaltbar, sondern auch Information vom ersten Mobilteil 1 der Gruppe über die durch die Radarsensoren geschaffenen Kommunikationskanal übertragbar.

Somit fungieren die Radarsensoren hierbei nicht nur als Sensor zur Bestimmung des relativen Abstandes, der relativen Geschwindigkeit und des Winkels eines Objektes der Anlage, sondern auch als Sender und/oder Empfänger von Daten.

Dabei ist vorteilhaft, dass die von dem oder den Radarsensoren eines der Mobilteile 1 der Gruppe erfassten Werte der einem detektierten Objekt zugeordneten Größen, wie relativer Abstand, relative Geschwindigkeit und des Winkels eines Objektes an ein anderes oder an andere Mobilteile 1 übertragen werden, so dass auch in deren Karte diese Objekte hinzufügbar sind.

Die Daten sind infolge der bidirektionalen Ausführung des Kommunikationskanals an alle Mobilteile 1, zu denen eine Sichtverbindung besteht, übermittelbar, zumindest aber an die Mobilteile 1 der Gruppe.

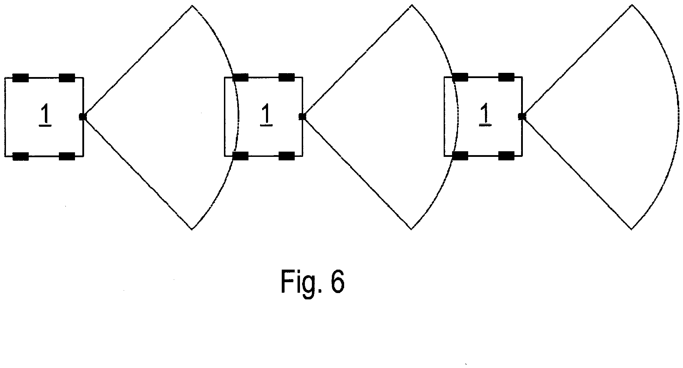

Wie in Figur 6 gezeigt, ist auch ein unidirektionaler Datenübertragungskanal statt des bidirektionalen verwendbar. Somit ist eine kostengünstig und einfach herstellbare Datenübertragung realisierbar. Das jeweils vorausfahrende Mobilteil 1 hat dabei an seiner Hinterseite eine Empfangseinheit.

Wie in Figur 5 und 6 gezeigt, sind dort Radarsensoren mit breitem empfindlichen Bereich verwendet, so dass der Winkel des Objekts zu detektieren ist.

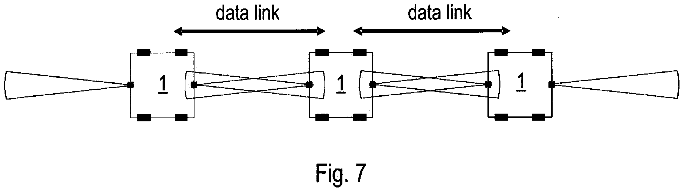

Wie in Figur 7 gezeigt, ist eine Winkelbestimmung bei Verwendung von Radarsensoren mit schmaleren empfindlichen Bereich vorteilig aber nicht notwendig.

Weicht eines der Mobilteile 1 von seiner Sollposition etwas ab, ist durch eine Winkelbestimmung dem nachfolgenden Mobilteil die Abweichung von der Sollposition bestimmbar und somit der Lenkwinkel des nachfolgenden Mobilteils 1 entsprechend steuerbar, so dass das nachfolgende Mobilteil 1 dem vorausfahrenden nachfolgt.

Weicht das Mobilteil 1 allerdings erheblich ab, verliert der Radarsensor des nachfolgenden Mobilteils 1 das Radarsignal des vorausfahrenden Mobilteils 1. Sobald das Verlieren eintritt, führt das nachfolgende Mobilteil 1 eine schlängelnde Fahrt aus, um wieder Kontakt zum Signal zu bekommen. Dabei wird von der Steuerung des Mobilteils 1 ein zeitlicher Verlauf für den Lenkwinkel vorgegeben, wobei der Lenkwinkel von einem Startwert ausgehend zunächst zunimmt und dann wieder abnimmt und den Startwert unterschreitet. Vorzugsweise wird hierbei ein Sägezahnartiger Funktionsverlauf dreiecksförmiger oder sinusförmiger Funktionsverlauf vorgegeben. Vorteil des sägezahnartigen Funktionsverlaufs ist ein sehr schnelles Auffinden des als Sender fungierenden Radarsensors, Vorteil des dreiecksförmigen Funktionsverlaufs ist ein sicheres Auffinden, Vorteil des sinusförmigen Verlaufs ist ein Vermindern des Risikos des Umfallens des Mobilteils 1.

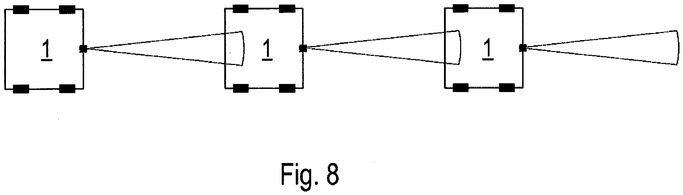

Auch bei der Ausführung nach Figur 8 ist ein solches Wiederauffinden der Datenaustauschverbindung ausführbar, wobei das als Empfänger fungierende Mobilteil 1 nach Verlieren des Empfangs des Radarsignals die schlängelnde Fahrt ausführt.

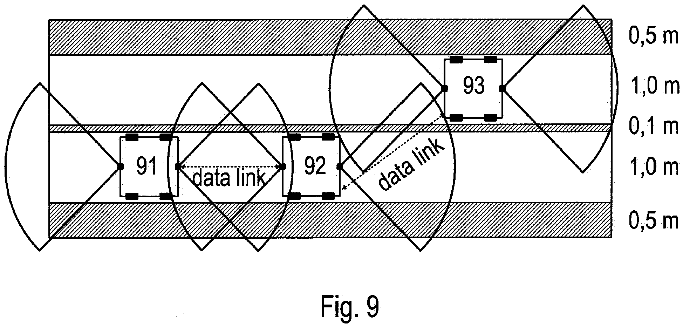

Wie in Figur 9 gezeigt, ist auch ein Überholvorgang ausführbar. Im in der Figur 9 gezeigten Beispiel fährt das **M**obilteil 92 dem ihm nachfolgenden Mobilteil 91 in Fahrtrichtung voraus, also von links nach rechts. Das auf der anderen Fahrspur entgegenkommende Mobilteil 93 wird vom Mobilteil 92 detektiert und die erfassten Werte des Abstandes und des Winkels sowie der zum Mobilteil 92 relativen Geschwindigkeit an das Mobilteil 91 übertragen. Somit ist es der Steuerung des Mobilteils 91 ermöglicht, eine Entscheidung zu treffen, ob ein Überholvorgang eingeleitet werden soll oder nicht. Dabei berücksichtigt das Mobilteil 91 auch den relativen Abstand und die relative Geschwindigkeit zum Mobilteil 92. Vorzugsweise berechnet die Steuerung die für den Überholvorgang benötigte Wegstrecke und Zeit und überprüft dann, ob eine Kollision mit dem Mobilteil 93 auftreten könnte, wobei es dessen Geschwindigkeit und Position berücksichtigt. Dabei wird die Geschwindigkeit aus den erfassten Werten der auf das Mobilteil 91 bezogenen relativen Geschwindigkeit des Mobilteils 92 und der auf das Mobilteil 92 bezogenen relativen Geschwindigkeit des Mobilteils 93 bestimmt.

Vorzugsweise übermittelt das Mobilteil 93 auch seinen für die Zukunft vorgegebenen Soll-Geschwindigkeitsverlauf, so dass dieser der Kollisionsprüfung zugrunde legbar ist.

Die Radarsensoren der Mobilteile (91, 92, 93) weisen dabei derart breite empfindliche Bereiche auf, dass das Mobilteil 92 das Mobilteil 93 zu detektieren in der Lage ist. Wichtig ist also, dass der empfindliche Bereich des Radarsensors des Mobilteils 92, insbesondere die senkrechte Projektion dieses Bereichs in die Verfahrfläche, mit der zweiten Fahrbahn überlappt. Auf diese Weise ist nicht nur eine Detektion des Mobilteils 93 ermöglicht, sondern auch eine Datenübertragung zwischen Mobilteil 92 und 93.

Der Steuerung des nachfolgenden Mobilteils 91 sind also nicht nur diejenigen Objekte bekannt, welche durch eigene Radarsensoren detektiert werden, sondern auch unbewegte oder bewegte Objekte, die durch das vorausfahrende Mobilteil 92 detektiert werden sowie weitere Informationen, die von einem weiteren Mobilteil 93 übertragen werden.

Bei weiteren erfindungsgemäßen Ausführungsbeispielen ist jedem von einem Mobilteil (91, 92, 93) aufgenommenen Transportgut eine Priorität zugeordnet. Abhängig von der Priorität wird der Überholvorgang freigegeben oder nicht.

Wenn also die Priorität der vom Mobilteil 93 aufgenommenen Last höher ist als die Priorität der vom Mobilteil 91 aufgenommenen Last, bleibt das Mobilteil 93 stehen und das Mobilteil 91 setzt zum Überholvorgang an, wenn ausreichend Platz vorhanden ist, diesen Überholvorgang auszuführen. Hierzu wird die oben beschriebene Kollisionsprüfung für den geplanten Weg ausgeführt.

Unter Armierung wird hier eine Baustahlarmierung eines Betonbodens verstanden. Insbesondere weist diese Armierung zumindest teilweise voneinander beabstandet im Beton angeordnete Stahlteile auf.

Bei weiteren erfindungsgemäßen Ausführungsbeispielen ist an jedem der Mobilteile jeweils ein Mittel zum Synchronisieren der Detektionen der, insbesondere aller, Radarsensoren auf dem Mobilteil angeordnet, insbesondere von der Steuerung umfasst. Somit ist zu jeder mittels des ersten Radarsensors erfassten Position die mittels der anderen Radarsensoren erfassten relativen, auf das Mobilteil bezogenen Positionen der Objekte bestimmbar. Die Genauigkeit der Karte ist somit verbessert. Auch wenn die Radarsensoren also jeweils kontinuierlich Messwerte zur Verfügung stellen, wird erfindungsgemäß mittels des Synchronisierungsmittels nur zu den vom Synchronisierungsmittel vorgegebenen Synchronisationszeitpunkten von allen Radarsensoren jeweils zeitgleich die Messwerte erfasst und weiterverarbeitet, insbesondere zur Generierung der Karte. Vorzugsweise wird das positionswertige Ausgangssignal jedes Radarsensors einer jeweiligen Sample-Hold-Schaltung, insbesondere Abtast-Halteglied, zugeführt, deren Ausgang einem jeweiligen Eingang eines Multiplexers zugeführt wird, dessen Ausgang einem Analog-Digital-Wandler zugeführt wird. Somit ist trotz der synchronen Messwerterfassung eine, insbesondere kostengünstige, zeitlich serielle Messwertbestimmung ermöglicht. Die so bestimmten Messwerte werden danach zur Bestimmung der Karte verwendet.

### Bezugszeichenliste

1 Mobilteil
40 Last, Transportgut
41 stationäre Anbauten
91 erstes Mobilteil
92 erstes Mobilteil

## Patentansprüche

1. System mit Anlage und Mobilteil (1),
wobei das Mobilteil (1) auf einer Verfahrfläche verfahrbar ist,
wobei die Verfahrfläche ein Oberflächenbereich eines Bodens der Anlage ist,
wobei im Boden eine Armierung angeordnet ist,
**wobei** das Mobilteil (1) eine Steuerung und mit der Steuerung elektrisch verbundene Radarsensoren aufweist,
wobei ein erster Radarsensor zur Detektion von oberhalb des Mobilteils (1) angeordneten Objekten, insbesondere an der Decke **der Anlage** stationär angeordneten Objekten, geeignet ausgeführt und am Mobilteil (1) angeordnet ist,
wobei ein zweiter Radarsensor zur Detektion der im Boden angeordneten Armierung, insbesondere also Baustahlarmierung eines Betonbodens, **des Systems** geeignet ausgeführt und am Mobilteil (1) angeordnet ist,
**wobei die Armierung von Betonmaterial umgeben ist, wobei die Armierung aus Stäben zusammengesetzt ist, welche in mehreren zueinander parallel angeordneten Ebenen angeordnet sind, wobei die Ebenen parallel zur Verfahrfläche ausgerichtet sind, auf welcher das Mobilteil (1) verfahrbar ist,**
wobei ein dritter Radarsensor zur Detektion von in der Anlage, insbesondere auf der Verfahrfläche und/oder zumindest in dem für das Bewegen des Mobilteils (1) auf der Verfahrfläche vom Mobilteil (1) berührbaren Raumbereich, angeordneten Objekten geeignet ausgeführt und am Mobilteil (1) angeordnet ist,
wobei ein Mittel zum Synchronisieren der Detektionen der, insbesondere aller, Radarsensoren auf dem Mobilteil (1) angeordnet ist, insbesondere von der Steuerung umfasst ist,
**wobei der dritte Radarsensor nicht nur zum Detektieren von Objekten geeignet ausgeführt ist, sondern auch als Transceiver von Daten fungiert,**
**wobei das System ein weiteres Mobilteil (1) und einen weiteren Radarsensor aufweist,**
**wobei die Steuerung auch von dem weiteren Radarsensor, der auf dem weiteren Mobilteil (1) angeordnet ist, detektierte Objekte berücksichtigt**

2. System nach Anspruch 1,
**dadurch gekennzeichnet, dass**
die Steuerung derart geeignet ausgeführt ist, dass aus den von den Radarsensoren detektierten Objekten eine Karte der Anlage, insbesondere der Verfahrfläche der Anlage, erstellt wird.

3. System nach mindestens einem der vorangegangenen Ansprüche,
**dadurch gekennzeichnet, dass**
die Daten auf der vom dritten Radarsensor gesendeten oder empfangenen Radarstrahlung aufmoduliert sind oder im Zeitschlitzverfahren gesendet oder empfangen werden,
insbesondere wobei beim Zeitschlitzverfahren in zeitlichen Abständen keine Detektion von Objekten, sondern Datenübertragung ausgeführt wird mittels der Radarstrahlung und/oder wobei beim Zeitschlitzverfahren zeitlich alternierend Datenübertragung und Abstandserfassung ausgeführt werden.

4. System nach mindestens einem der vorangegangenen Ansprüche,
**dadurch gekennzeichnet, dass**
**die Steuerung auch von dem weiteren Radarsensor, der auf dem weiteren Mobilteil (1) angeordnet ist, detektierte Objekte bei der Kartenerstellung und/oder bei einer Kollisionsprüfung für einen geplanten Bewegungsablauf berücksichtigt.**

5. System nach mindestens einem der vorangegangenen Ansprüche,
**dadurch gekennzeichnet, dass**
bei der Detektion eines Objektes durch einen jeweiligen der Radarsensoren der Abstand des Objektes, Geschwindigkeit des Objektes und/oder Winkel des Objektes erfasst wird, insbesondere relativ zum jeweiligen Radarsensor.

6. Verfahren zum Betreiben eines Systems nach mindestens einem der vorangegangenen Ansprüche **mit zum Mobilteil (1) baugleichen, zwei weiteren Mobilteilen (1),**
in einem ersten Verfahrensschritt auf einer ersten Fahrspur ein erstes **der Mobilteile (1)** hinter einem zweiten **der Mobilteile (1)** fährt oder angeordnet ist, wobei die von dem dritten Radarsensor des zweiten Mobilteils(1) detektierten Werte des auf das zweite Mobilteil (1) bezogenen Abstandes eines dritten **der Mobilteile (1),** der auf das zweite Mobilteil (1) bezogene Geschwindigkeit des dritten Mobilteils(1) und des auf das zweite Mobilteil (1) bezogenen, **relativ zur Fahrtrichtung des zweiten Mobilteils(1) gemessenen** Winkels des dritten Mobilteils(1) an das erste Mobilteil (1) übermittelt werden,
wobei in einem zweiten Verfahrensschritt die Werte verwendet werden, um eine Kollisionsprüfung für einen vorgesehenen Überholvorgang zum Überholen des zweiten Mobilteils (1) mittels des ersten Mobilteils (1) auszuführen,
wobei auch die von dem dritten Radarsensor des ersten Mobilteils (1) detektierten Werte des auf das erste Mobilteil (1) bezogenen Abstandes des zweiten Mobilteils (1), der auf das erste Mobilteil (1) bezogene Geschwindigkeit des zweiten Mobilteils (1) und des auf das erste Mobilteil (1) bezogenen, **relativ zur Fahrtrichtung des ersten Mobilteils (1) gemessenen** Winkels des zweiten Mobilteils (1) berücksichtigt werden,

7. Verfahren nach Anspruch 6,
**dadurch gekennzeichnet, dass**
den von den Mobilteilen (1) aufgenommenen Transportgütern eine jeweilige Priorität zugeordnet wird,
wobei der Überholvorgang nur ausgeführt wird, wenn die Priorität des vom ersten Mobilteil (1) aufgenommenen Transportgutes höher ist als die Priorität des vom zweiten Mobilteil (1) aufgenommenen Transportgutes und höher ist als die Priorität des vom dritten Mobilteil (1) aufgenommenen Transportgutes.

## Claims

1. System comprising a facility and a mobile component (1),
wherein the mobile component (1) is movable on a travel surface,
wherein the travel surface is a surface region of a floor of the facility,
wherein a reinforcement is arranged in the floor,
wherein the mobile component (1) has a controller and radar sensors electrically connected to the controller,
wherein a first radar sensor is suitably configured for detecting objects arranged above the mobile component (1), in particular objects immovably arranged on the ceiling of the facility, and is arranged on the mobile component (1),
wherein a second radar sensor is suitably configured for detecting the system reinforcement arranged in the floor, i.e. in particular the structural-steel reinforcement of a concrete floor, and is arranged on the mobile component (1),
wherein the reinforcement is enclosed by concrete material, wherein the reinforcement is composed of bars that are arranged in a plurality of planes arranged in parallel with one another, wherein the planes are oriented in parallel with the travel surface on which the mobile component (1) is movable,
wherein a third radar sensor is suitably configured for detecting objects arranged in the facility, in particular on the travel surface and/or at least in the spatial region with which the mobile component (1) can come into contact in order for the mobile component (1) to move on the travel surface, and is arranged on the mobile component (1),
wherein a means for synchronising the detections of the radar sensors, in particular of all the radar sensors, is arranged on the mobile component (1), the controller in particular comprising said means,
wherein the third radar sensor not only is suitably configured for detecting objects but also acts as a data transceiver,
wherein the system has a further mobile component (1) and a further radar sensor,
wherein the controller also takes into account objects detected by the further radar sensor arranged on the further mobile component (1).

2. System according to claim 1,
**characterised in that**
the controller is suitably configured such that a map of the facility, in particular of the travel surface of the facility, is created from the objects detected by the radar sensors.

3. System according to at least one of the preceding claims,
**characterised in that**
the data either are modulated onto the radar radiation emitted or received by the third radar sensor or are emitted or received using the time-division multiple access method,
in particular wherein, in the time-division multiple access method, in time intervals, objects are not detected but data are transmitted by means of the radar radiation, and/or wherein, in the time-division multiple access method, data are transmitted and distances acquired in an alternating manner over time.

4. System according to at least one of the preceding claims,
**characterised in that**
when creating the map and/or when performing collision testing for a planned sequence of movements, the controller also takes into account objects detected by the further radar sensor arranged on the further mobile component (1).

5. System according to at least one of the preceding claims,
**characterised in that**
when one of the radar sensors detects an object, the distance to the object, the velocity of the object and/or the angle of the object are acquired, in particular relative to the radar sensor in question.

6. Method for operating a system according to at least one of the preceding claims comprising two further mobile components (1) that are structurally identical to the mobile component (1),
in a first method step, in a first lane, a first of the mobile components (1) either travels or is arranged behind a second of the mobile components (1), wherein the values, detected by the third radar sensor of the second mobile component (1), of the distance to a third of the mobile components (1) from the second mobile component (1), of the velocity of the third mobile component (1) in relation to the second mobile component (1) and of the angle of the third mobile component (1) in relation to the second mobile component (1), measured relative to the travel direction of the second mobile component (1), are communicated to the first mobile component (1),
wherein, in a second method step, the values are used to perform collision testing for an intended overtaking operation for the first mobile component (1) to overtake the second mobile component (1),
wherein the values, detected by the third radar sensor of the first mobile component (1), of the distance to the second mobile component (1) from the first mobile component (1), of the velocity of the second mobile component (1) in relation to the first mobile component (1) and of the angle of the second mobile component (1) in relation to the first mobile component (1), measured relative to the travel direction of the first mobile component (1), are also taken into account.

7. Method according to claim 6,
**characterised in that**
respective priorities are assigned to the items in transit that are received by the mobile components (1),
wherein the overtaking operation is carried out only if the priority of the item in transit that is received by the first mobile component (1) is higher than the priority of the item in transit that is received by the second mobile component (1) and higher than the priority of the item in transit that is received by the third mobile component (1).

## Revendications

1. Système avec installation et unité mobile (1),
l'unité mobile (1) étant déplaçable sur une surface de déplacement,
la surface de déplacement étant une zone de surface d'un sol de l'installation, une armature étant disposée dans le sol,
l'unité mobile (1) comprenant une unité de commande et capteurs radar électriquement reliés à l'unité de commande,
un premier capteur radar étant conçu de manière appropriée pour la détection d'objets disposés au-dessus de l'unité mobile (1), en particulier d'objets disposés de manière stationnaire au plafond de l'installation, et étant disposé sur l'unité mobile (1),
un deuxième capteur radar étant conçu de manière appropriée pour la détection de l'armature disposée dans le sol, en particulier donc d'une armature en acier de construction d'une dalle en béton du système, et étant disposé sur l'unité mobile (1),
l'armature étant entourée de matériau en béton, l'armature étant composée de barres qui sont disposées dans plusieurs plans disposés parallèlement les uns aux autres, les plans étant orientés parallèlement à la surface de déplacement sur laquelle l'unité mobile (1) est déplaçable,
un troisième capteur radar étant conçu de manière appropriée pour la détection d'objets disposés dans l'installation, en particulier sur la surface de déplacement et/ou au moins dans la zone spatiale pouvant être touchée par l'unité mobile (1) lors du déplacement de l'unité mobile (1) sur la surface de déplacement, et étant disposé sur l'unité mobile (1),
un moyen de synchronisation des détections des capteurs radar, en particulier de tous les capteurs radar, étant disposé sur l'unité mobile (1), en particulier compris dans l'unité de commande,
le troisième capteur radar n'étant pas seulement conçu de manière appropriée pour détecter des objets, mais servant également d'émetteur-récepteur de données,
le système comprenant une autre unité mobile (1) et un autre capteur radar,
l'unité de commande prenant également en compte les objets détectés par l'autre capteur radar, qui est disposé sur l'autre unité mobile (1)

2. Système selon la revendication 1, **caractérisé en ce que** l'unité de commande est conçue de manière appropriée pour qu'à partir des objets détectés par les capteurs radar, une carte de l'installation, en particulier de la surface de déplacement de l'installation, soit établie.

3. Système selon au moins l'une des revendications précédentes, **caractérisé en ce que** les données sont modulées sur le rayonnement radar émis ou reçu par le troisième capteur radar ou sont transmises ou reçues selon le procédé à créneaux temporels, en particulier, lors du procédé à créneaux temporels, aucun objet n'est détecté à certains intervalles de temps, mais une transmission de données est exécutée au moyen du rayonnement radar et/ou, lors du procédé à créneaux temporels, une transmission de données et une mesure de distance sont exécutées en alternance temporelle.

4. Système selon au moins l'une des revendications précédentes, **caractérisé en ce que** l'unité de commande prend également en compte, lors de l'établissement de la carte et/ou lors d'une vérification de collision pour une séquence de mouvement planifiée, les objets détectés par l'autre capteur radar, qui est disposé sur l'autre unité mobile (1).

5. Système selon au moins l'une des revendications précédentes, **caractérisé en ce que**, lors de la détection d'un objet par chacun des capteurs radar, la distance de l'objet, la vitesse de l'objet et/ou l'angle de l'objet sont détectés, en particulier relativement au capteur radar respectif.

6. Procédé de fonctionnement d'un système selon au moins l'une des revendications précédentes avec, identiques à l'unité mobile (1), deux autres unités mobiles (1), dans une première étape de procédé, une première des unités mobiles (1) circulant ou étant disposée sur une première voie de circulation derrière une deuxième des unités mobiles (1), les valeurs détectées par le troisième capteur radar de la deuxième unité mobile (1) concernant la distance, par rapport à la deuxième unité mobile (1), d'une troisième des unités mobiles (1), la vitesse de la troisième unité mobile (1) par rapport à la deuxième unité mobile (1) et l'angle de la troisième unité mobile (1) par rapport à la deuxième unité mobile (1), mesuré relativement à la direction de déplacement de la deuxième unité mobile (1), étant transmises à la première unité mobile (1), dans une deuxième étape de procédé, les valeurs étant utilisées pour exécuter une vérification de collision pour une manoeuvre de dépassement prévue afin de dépasser la deuxième unité mobile (1) au moyen de la première unité mobile (1), les valeurs détectées par le troisième capteur radar de la première unité mobile (1) concernant la distance, par rapport à la première unité mobile (1), de la deuxième unité mobile (1), la vitesse de la deuxième unité mobile (1) par rapport à la première unité mobile (1) et l'angle de la deuxième unité mobile (1) par rapport à la première unité mobile (1), mesuré relativement à la direction de déplacement de la première unité mobile (1), étant également prises en compte,

7. Procédé selon la revendication 6, **caractérisé en ce qu'**une priorité respective est attribuée aux marchandises transportées prises en charge par les unités mobiles (1), la manoeuvre de dépassement n'étant exécutée que si la priorité de la marchandise transportée prise en charge par la première unité mobile (1) est supérieure à la priorité de la marchandise transportée prise en charge par la deuxième unité mobile (1) et supérieure à la priorité de la marchandise transportée prise en charge par la troisième unité mobile (1).
